# EUROPÄISCHE PATENTSCHRIFT

(11) **EP 2 339 219 B1**
(45) Veröffentlichungstag und Bekanntmachung des Hinweises auf die Patenterteilung: **02.11.2016**
(21) Anmeldenummer: 10015877.3
(22) Anmeldetag: 21.12.2010
(51) Int. Cl.: F16L 41/06

(54) **Anbohrarmatur**
Tapping fitting
Appareil de perçage

(30) Priorität: 22.12.2009 DE 102009060410
(43) Veröffentlichungstag der Anmeldung: 29.06.2011
(73) Patentinhaber: Friatec Aktiengesellschaft, 68222 Mannheim (DE)
(72) Erfinder: Maier, Fabian, 67368 Westheim (DE)
(74) Vertreter: Angerhausen, Christoph

(56) Entgegenhaltungen:
- EP-A2- 0 393 560
- DE-C1- 10 202 676
- FR-A1- 2 820 487

## Beschreibung

Die Erfindung betrifft eine Anbohrarmatur, welche mit einem Rohr verbindbar ist, mit einem Anbohrstutzen, auf den eine Anbohreinheit mit einem Bohrer zum Anbohren des Rohres aufzusetzen und in einer Bohrposition zu verriegeln ist.

Anbohrarmaturen aus Kunststoff sind bekannt, beispielsweise aus der EP 0 726 419 B1, welche mit einem Kunststoffrohr durch Schweißen verbindbar sind. Die Anbohrarmatur enthält einen Anbohrstutzen, durch welchen ein Bohrer geführt wird, um das Rohr anzubohren.

Die DE 102 02 676 C1 beschreibt eine Anbohrarmatur, welche mit einem Rohr verbindbar ist, mit einem Anbohrstutzen, auf den eine Anbohreinheit mit einem Bohrer zum Anbohren des Rohres aufzusetzen und in einer Bohrposition zu verriegeln ist. Entsprechende Anbohrarmaturen sind auch aus der EP 0 393 560 A2 und der FR 2 820 487 A1 bekannt.

Die Erfindung stellt sich zur Aufgabe, eine Anbohrarmatur mit einer externen Anbohreinheit zur Verfuegung zu stellen, bei der sichergestellt wird, dass während des Bohrvorganges kein Medium in den Anbohrstutzen tritt oder die Anbohreinheit unter dem Druck des Mediums verschoben oder vom Rohr geschoben würde.

Diese Aufgabe wird durch eine Anbohrarmatur gemäß Anspruch 1 gelöst. Vorteilhafte Ausgestaltungen sind Gegenstand der Unteransprüche.

Erfindungsgemäß ist im Anbohrstutzen ein Ventil vorgesehen, das sich bei aufgesetzter Anbohreinheit mittels eines Kugelhahns erst dann öffnen lässt, wenn die Anbohreinheit in ihrer Bohrposition, in der eine definierte Ausrichtung zwischen Anbohreinheit und Kugelhahn besteht, veriegelt ist.

Bevorzugt ist das Ventil ein in den Anbohrstutzen integriertes Kugelventil.

Somit schafft die Erfindung eine Kombination aus einem Absperr- und einem Anbohrsystem, wobei aufgrund der Zwangskopplung zwischen den beiden Funktionselementen ein zufalliges Öffnen des Kugelventils ausgeschlossen ist.

Im Folgenden soll die Erfindung anhand der beigefügten Zeichnung näher erläutert werden.

Dabei zeigt:
- Figur 1: eine Anbohrarmatur gemäß einer Ausführungsform der vorliegenden Erfindung in Draufsicht bzw. im Schnitt;
- Figur 2: die Anbohrarmatur der Figur 1, wie sie auf ein Rohr aufgesetzt ist;
- Figur 3: die Anbohrarmatur gemäß Figur 2, bei der ein Kugelhahn zum Betätigen des Kugelventils aufgesetzt wird;
- Figur 4: die Anbohrarmatur gemäß Figur 3 mit einer externen Anbohreinheit;
- Figur 5: die Anbohrarmatur gemäß Figur 4 mit aufgesetzter Anbohreinheit, wobei der Kugelhahn in Schließposition ist;
- Figur 6: die Anbohrarmatur, gemäß Figur 5, im axialen Schnitt durch den Anbohrstutzen gesehen;
- Figur 7: eine perspektivische Ansicht der Anbohrarmatur gemäß Figur 5 bei teilweise geöffnetem Kugelhahn;
- Figur 8: die Anbohrarmatur gemäß Figur 5 und Figur 7 mit Offenstellung des Kugelhahns;
- Figur 9: die Anbohrarmatur gemäß Figur 8 im Axialschnitt durch den Anbohrstutzen gesehen;
- Figur 10: eine Schnittansicht entsprechend der Figur 9 mit vorgeschobenen Bohrer;
- Figur 11: eine Schnittansicht entsprechend der Figur 10, wobei der Bohrer zurückgezogen ist;
- Figur 12: die Anbohrarmatur, gemäß Figur 11, wobei der Kugelhahn in Schließstellung ist;
- Figur 13: die Anbohrarmatur gemäß Figur 12 mit abgenommenem Kugelhahn;
- Figur 14: die Anbohrarmatur gemäß Figur 13, wobei zusätzlich die Anbohreinheit entfernt ist; und
- Figur 15: die fertiggestellte Kombination aus Rohr und Anbohrarmatur gemäß der vorliegenden Erfindung.

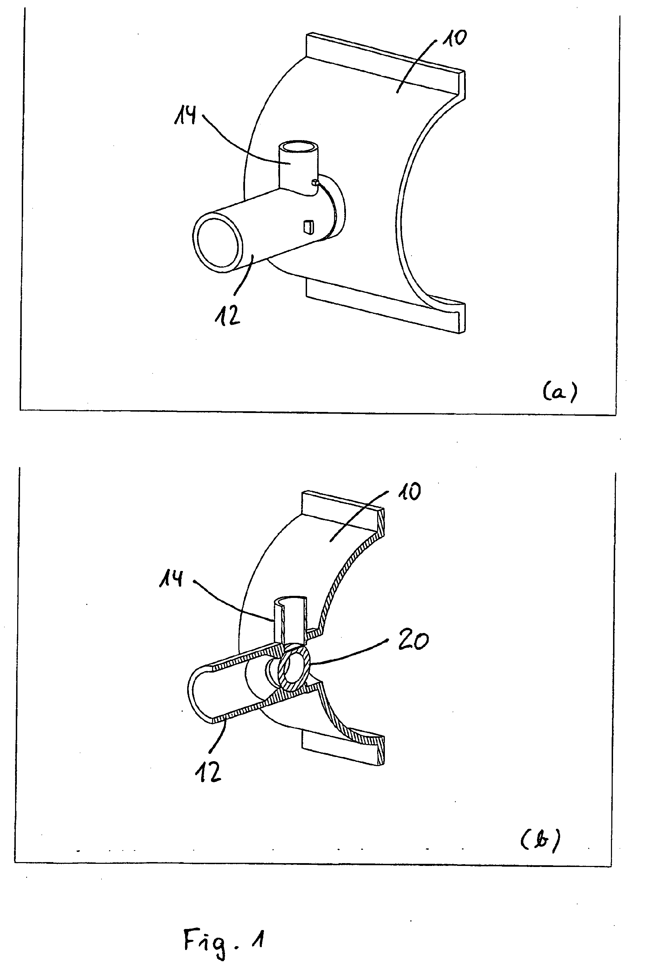

Figur 1 zeigt im Teilbild (a) eine Anbohrarmatur gemäß einer Ausführungsform der vorliegenden Erfindung, die aus einem Sattel 10, welcher auf Rohr gelegt wird, und einem daran festgelegten Anbohrstutzen 12 besteht. Der Anbohrstutzen 12 weist seitlich, d. h. senkrecht zur Achse des Anbohrstutzens 12, einen Abgang 14 auf. In der Querschnittsansicht des Teilbildes (b) ist dargestellt, wie im Bereich des Abgangs 14 im Anbohrstützen 12 ein Kugelventil 20 integriert ist.

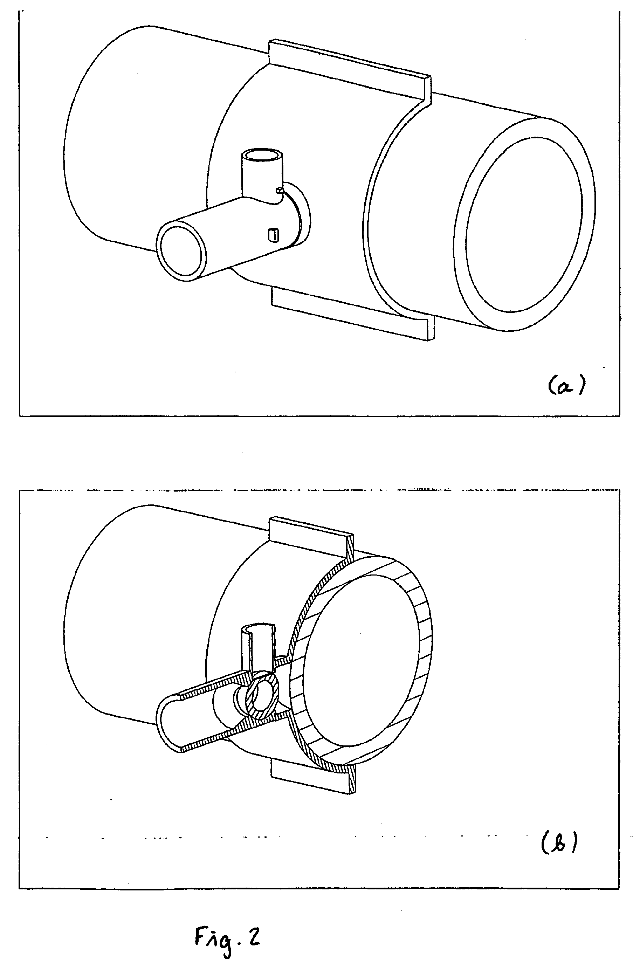

Figur 2 zeigt die Anbohrarmatur gemäß Figur 1, wie sie auf ein Rohr aufgesetzt ist, in perspektivischer Ansicht im Teilbild (a). Die Schnittansicht im Teilbild (b) entspricht, was die Anbohrarmatur betrifft, der des Teilbildes (b) der Figur 1.

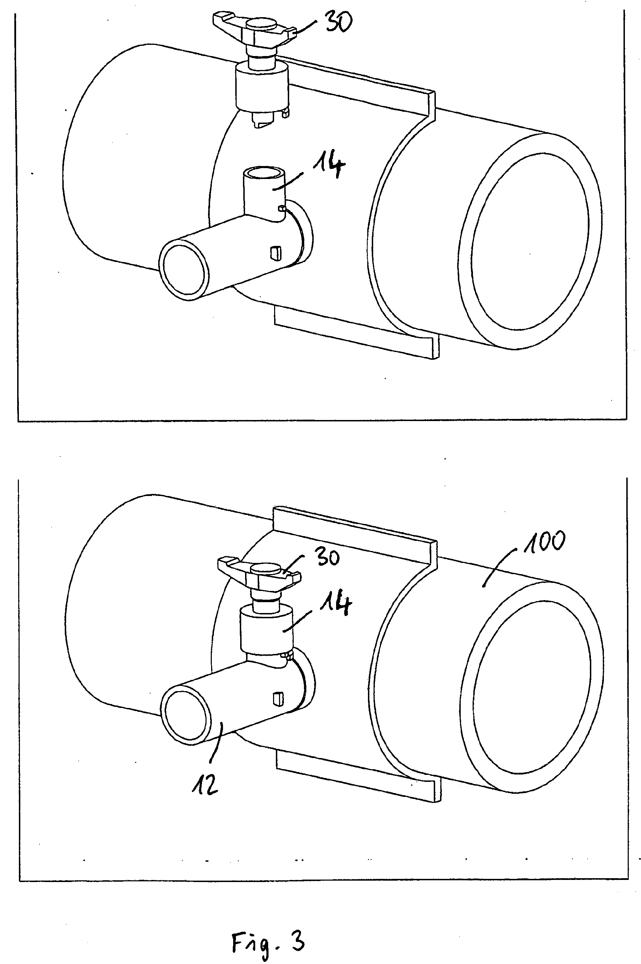

Figur 3 zeigt, wie auf den Abgang 16 ein Kugelhahn 30 aufzusetzen ist. Der Kugelhahn 30 dient zur Betätigung des in dieser Figur nicht sichtbaren Kugelventils. Dieses ist in der Schließstellung, so dass der Anbohrstutzen 12 gegenüber dem Rohr 100 verschlossen ist.

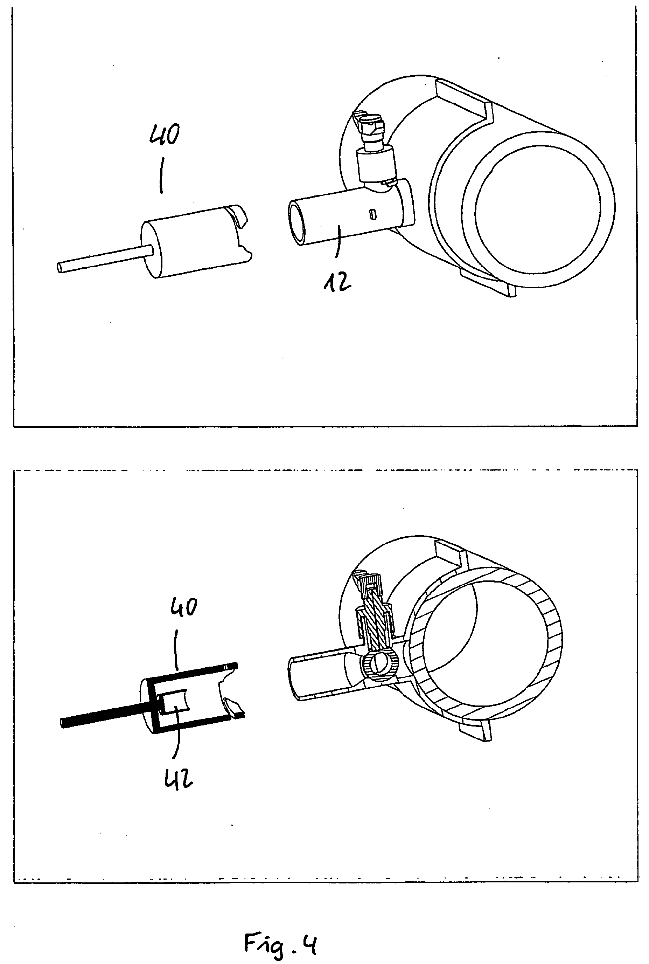

Wie in Figur 4 zu erkennen, wird eine externe Anbohreinheit 40, die einen Bohrer 42 zum Anbohren des Rohres 100 enthält, zum Aufsetzen auf den Anbohrstutzen 12 vorbereitet.

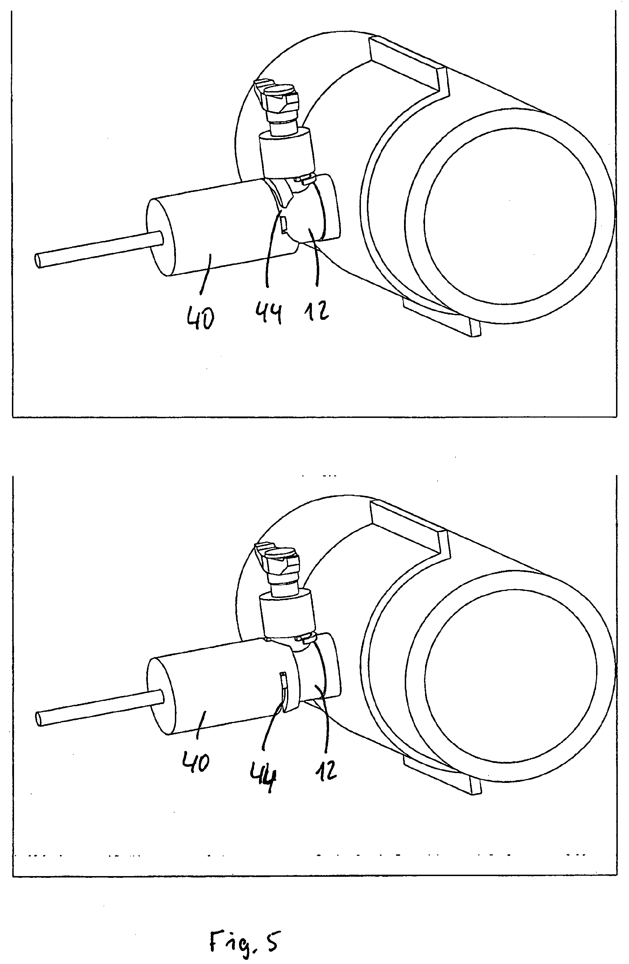

Figur 5 zeigt die Anbohrarmatur mit aufgesetzter Anbohreinheit 40, die über eine Dreh-RastVerbindung oder Bajonettverbindung 44 an dem Anbohrstutzen 12 festgelegt ist.

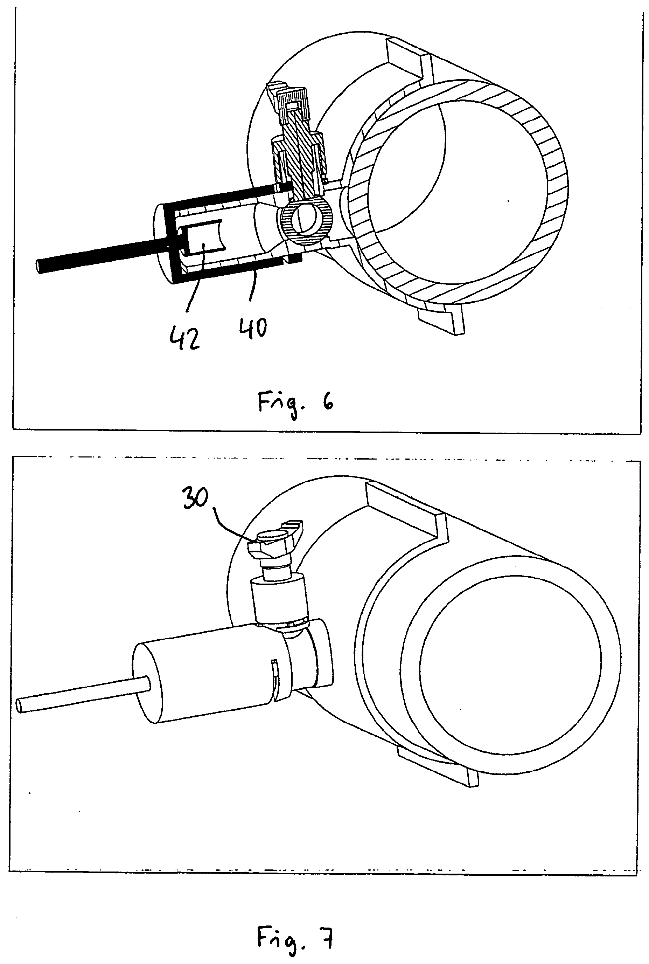

In Figur 6 ist die Situation im axialen Schnitt durch den Anbohrstutzen bzw. das Rohr dargestellt. Der Bohrer 42 befindet sich zurückgezogen in der Anbohreinheit 40.

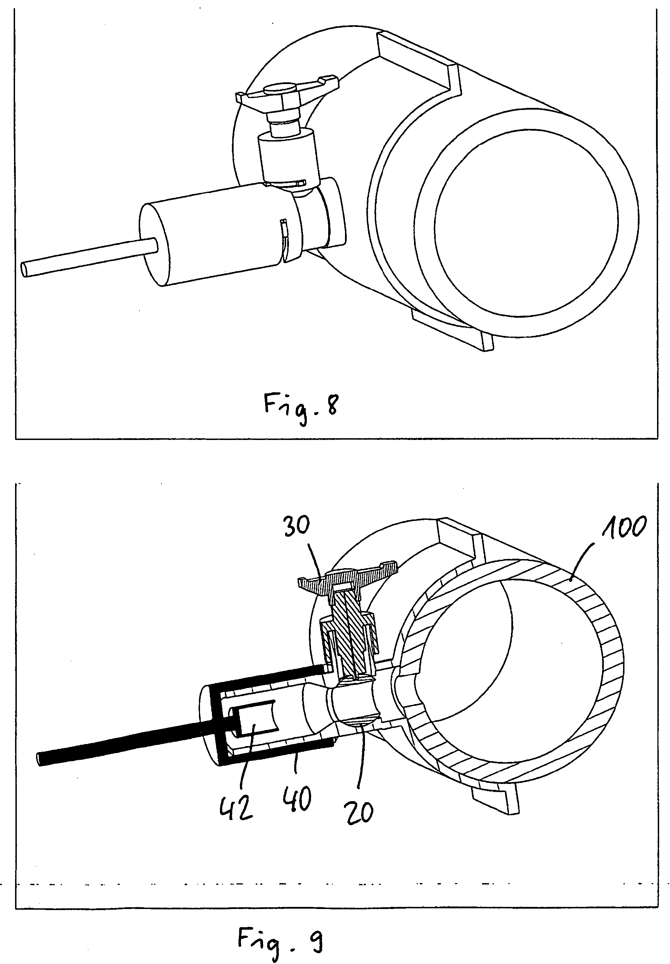

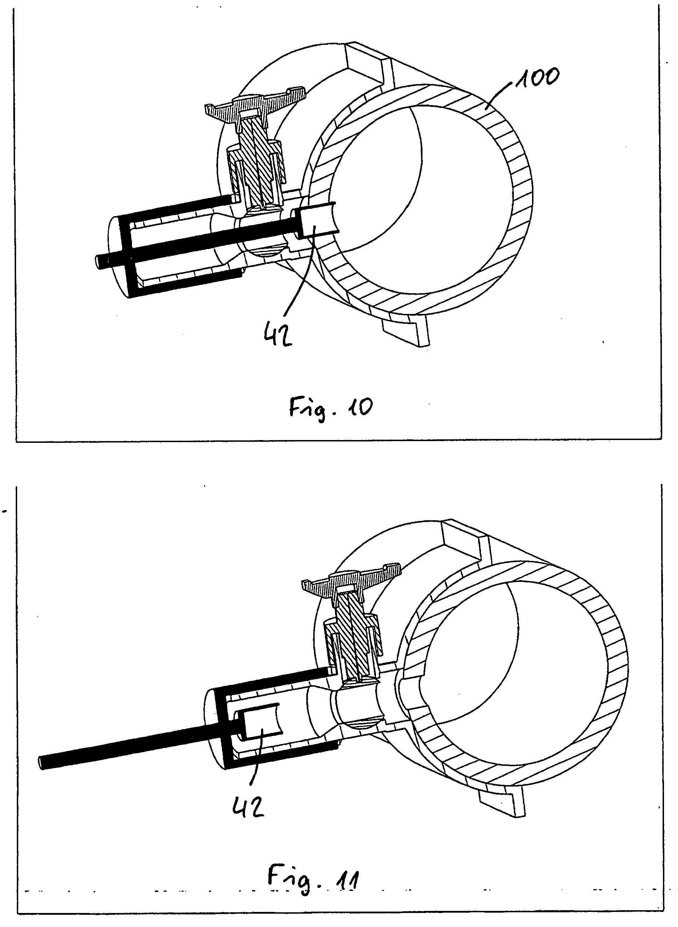

In dieser verriegelten Bohrposition der Anbohreinheit 40 kann erst gemäß den Figuren 7 und 8 der Kugelhahn 30 verdreht werden, wobei eine Nase, ein Stift oder ein Ansatz in eine entsprechende Führungsnut in der Anbohreinheit 40 greift, so dass das integrierte Kugelventil 20 einen Durchlass für den Bohrer 42 auf das Rohr 100 zu zur Verfügung stellt, wie es die Schnittansicht der Figur 9 deutlich macht. Das Öffnen des Kugelventils 20 ist also nur bei einer definierten Ausrichtung zwischen Anbohreinheit 40 und Kugelhahn 30 möglich. Durch Vorschub des Bohrers 42 wird der Zugang zum Rohr 100 geschaffen, Figur 10, anschließend wird der Bohrer 42 wieder zurückgezogen, Figur 11.

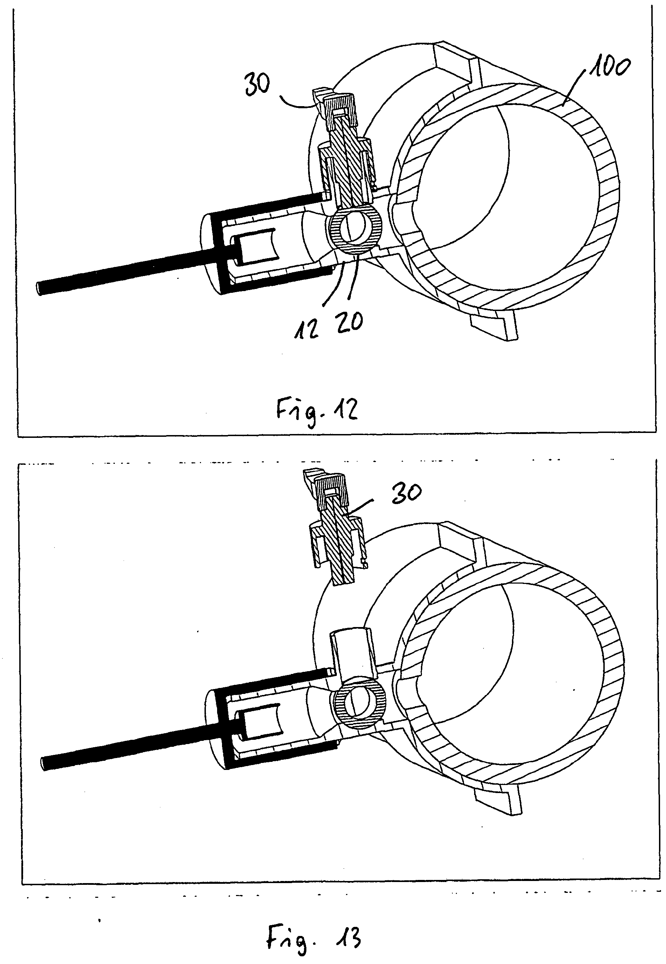

Anschließend wird, wie in Figur 12 dargestellt, der Kugelhahn 30 wieder in die Schließstellung gebracht, so dass Anbohrstutzen 12 und Rohr 100 fluidisch voneinander getrennt sind. Anschließend kann der Kugelhahn 30 entfernt werden, Figur 13. Damit wird auch die Anbohreinheit 40 zum Entriegeln freigegeben.

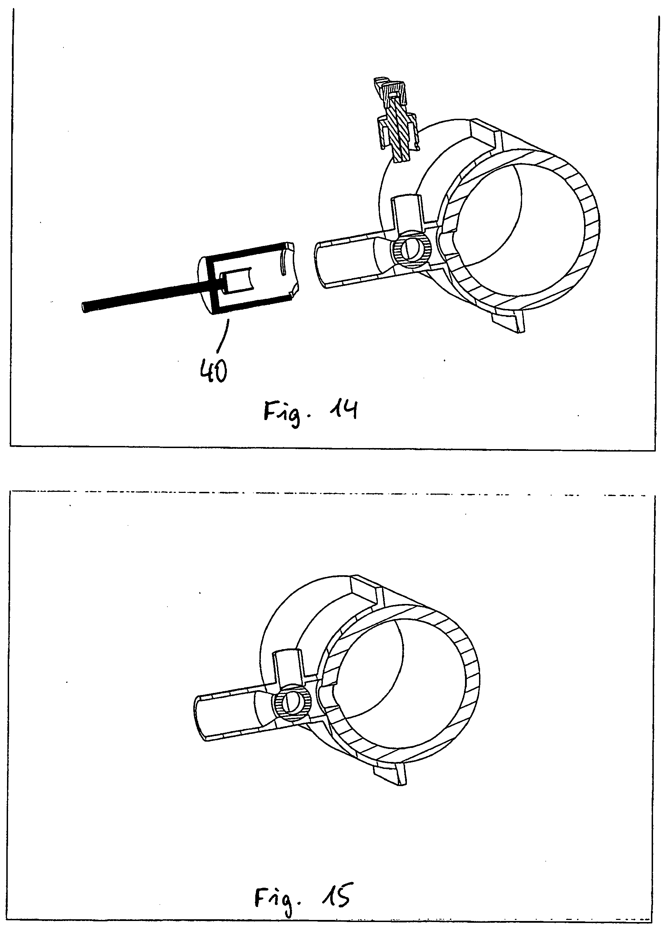

Wie in Figur 14 veranschaulicht, wird die externe Anbohreinheit 40 vom Anbohrstutzen 12 durch Lösen der Bajonettverbindung 44 entfernt. Figur 15 zeigt das fertiggestellte System aus erfindungsgemäßer Anbohrarmatur und Rohr.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. System aus einer Anbohreinheit (40) und einer Anbohrarmatur, welche mit einem Rohr (100) verbindbar ist, wobei die Anbohrarmatur einen Anbohrstutzen (12) aufweist, auf den die Anbohreinheit (40) mit einem Bohrer (42) zum Anbohren des Rohres aufzusetzen und in einer Bohrposition zu verriegeln ist,
**dadurch gekennzeichnet, dass** im Anbohrstutzen (12) ein Kugelventil (20) vorgesehen ist, das sich bei aufgesetzter Anbohreinheit (40) mittels eines Kugelhahns (30) erst dann öffnen lässt, wenn die Anbohreinheit (40) in ihrer Bohrposition, in der eine definierte Ausrichtung zwischen Anbohreinheit (40) und Kugelhahn (30) besteht, verriegelt ist, wobei in der auf dem Anbohrstutzen (12) verriegelten Bohrposition der Anbohreinheit (40) eine Nase, ein Stift oder ein Ansatz des Anbohrstutzens (12) in eine entsprechende Führungsnut in der Anbohreinheit (40) greift, und wobei das geöffnete Kugelventil (30) einen Durchlass für den Bohrer (42) auf das Rohr (100) zu zur Verfügung stellt.

2. Anbohrarmatur nach Anspruch 1, **dadurch gekennzeichnet, dass** das Ventil ein in den Anbohrarmatur (12) integriertes Kugelventil (20) ist.

## Claims

1. System comprising a tapping unit (40) and a tapping saddle which can be connected to a pipe (100), wherein the tapping saddle has a tapping connection piece (12) on which the tapping unit (40) with a drill bit (42) for tapping the pipe is to be placed and locked in a tapping position,
**characterised in that**, provided in the tapping connection piece (12) is a ball valve (20) which, when the tapping unit (40) is in place, can only be opened by means of a ball tap (30) when the tapping unit (40) is locked in its tapping position in which there is a defined orientation between tapping unit (40) and ball tap (30), wherein, when the tapping unit (40) is locked on the tapping connection piece (12) in the tapping position, a lug, a pin or a projection of the tapping connection piece (12) catches in a corresponding guide groove in the tapping unit (40), and wherein the open ball valve (30) provides a passage for the drill bit (42) onto the pipe (100).

2. Tapping saddle according to claim 1, **characterised in that** the valve is a ball valve (20) integrated in the tapping saddle (12).

## Revendications

1. Système composé d'une unité de perçage (40) et d'une armature de perçage qui peut être reliée à un tuyau (100), l'armature de perçage comportant un embout de perçage (12) sur lequel l'unité de perçage (40) avec un foret (42) doit être placée pour percer le tuyau et être verrouillée dans une position de perçage,
**caractérisé en ce qu'**il est prévu dans l'embout de perçage (12) une soupape sphérique (20) qui, lorsque l'unité de perçage (40) est en place, ne peut être ouverte au moyen d'un robinet à boisseau sphérique (30) que lorsque l'unité de perçage (40) est verrouillée dans sa position de perçage dans laquelle il existe une orientation définie entre l'unité de perçage (40) et le robinet à boisseau sphérique (30), un taquet, une tige ou une saillie de l'embout de perçage (12) étant en prise dans une rainure de guidage correspondante dans l'unité de perçage (40) lorsque l'unité de perçage (40) est dans la position de perçage verrouillée sur l'embout de perçage (12) et la soupape sphérique (30) ouverte offrant un passage pour le foret (42) vers le tuyau (100).

2. Armature de perçage selon la revendication 1, **caractérisée en ce que** la soupape est une soupape sphérique (20) intégrée dans l'armature de perçage (12).
